# EUROPÄISCHE PATENTSCHRIFT

(11) **EP 2 755 845 B1**
(45) Veröffentlichungstag und Bekanntmachung des Hinweises auf die Patenterteilung: **25.11.2020**
(21) Anmeldenummer: 12728052.7
(22) Anmeldetag: 11.06.2012
(51) Int. Cl.: G07F 15/00, H02J 7/00, B60L 53/30, B60L 53/65, B60L 53/66, B60L 53/68, H02J 13/00

(54) **SYSTEM UND VERFAHREN ZUM ELEKTRISCHEN LADEN VON GERÄTEN**
SYSTEM AND METHOD TO ELECTRICALLY CHARGE DEVICES
SYSTÈME ET PROCÉDÉ DE CHARGE ÉLECTRIQUE DES DISPOSITIFS

(30) Priorität: 15.09.2011 DE 102011113355
(43) Veröffentlichungstag der Anmeldung: 23.07.2014
(73) Patentinhaber: innogy SE, 45128 Essen (DE)
(72) Erfinder: WAFFNER, Jürgen, 45307 Essen (DE); GAUL, Armin, 59379 Selm (DE)
(74) Vertreter: Cohausz & Florack
(86) Internationale Anmeldenummer: PCT/EP2012/060961
(87) Internationale Veröffentlichungsnummer: WO 2013/037518

(56) Entgegenhaltungen:
- US-A1- 2009 210 357
- US-A1- 2010 017 249
- US-A1- 2010 076 825
- US-A1- 2010 114 798
- US-A1- 2010 237 985

## Beschreibung

Der Gegenstand betrifft ein System, einen Zentralrechner sowie ein Verfahren zum elektrischen Laden von Geräten, insbesondere von Fahrzeugen, wie beispielsweise Elektrofahrzeugen, beispielsweise Elektroautos, Elektroroller, Elektromotorräder, Elektrofahrräder oder dergleichen.

Zum Laden von elektrischen Fahrzeugen, insbesondere in öffentlichen oder halböffentlichen Bereichen werden heutzutage Ladestationen zur Verfügung gestellt. Diese Ladestationen eignen sich dazu, mit dem Elektrofahrzeug verbunden zu werden und stellen elektrische Energie zur Verfügung. Der Ladevorgang an sich ist bekannt. Ferner sind Ladestationen als solche ebenfalls bekannt. Sobald Ladestationen nicht rein zum Bereitstellen von elektrischer Energie gebildet sind, sondern Funktionen wie Benutzeridentifikationen, Zahlfunktionen, Mensch-Maschine-Schnittstellen, Kommunikationsfunktionen, Messfunktionen oder dergleichen erfüllen müssen, steigt die Komplexität der in den Ladestationen verbauten Komponenten. Bisherige Ansätze verfolgen das Ziel, dass innerhalb der Ladestation die "Intelligenz" vorhanden ist. Das heißt, dass die Ladestation gegebenenfalls unter Einbeziehung eines Zentralrechners autark den Ladevorgang steuert.

In diesem Fall nimmt die Ladestation die Nutzeridentifikation vor. Danach gibt die Ladestation nach erfolgter Nutzeridentifikation den Ladestrom frei. Anschließend überwacht die Ladestation den Ladevorgang als solches. Bei einer erreichten Lademenge unterbricht die Ladestation den Ladestrom eigenständig. Ferner unterstützen heutige Ladestationen den Bezahlvorgang ebenfalls autark, das heißt, dass in den Ladestationen selbst Zahlfunktionen implementiert werden, die mit den Ladefunktionen und den Messfunktionen innerhalb der Ladestation interagieren. Hierzu sind in den Ladestationen leistungsfähige Rechner notwendig, die die Zustandsübergänge der einzelnen Systeme innerhalb der Ladestation überwachen und steuern. All das führt dazu, dass bekannte Ladestationen sehr teuer sind.

Auf der anderen Seite existieren rudimentäre Ladekonzepte, bei denen mehrere Ladestationen zentral gesteuert werden. Die zentrale Steuerung bezieht sich jedoch hier ausschließlich auf das Zu- und Abschalten eines Ladestroms.

Aus den Veröffentlichungen US 2010/237985 A1 und US 2010/076825 A1 sind Ladestationen bekannt, welche Informationen zu einem Lade- oder Entladevorgang mit einer Zentrale austauschen. Hierdurch wird der Ladevorgang zentral gesteuert.

Dies hat den Nachteil, dass die Ladestationen nur einen geringen Benutzerkomfort gewährleisten können. Ferner lassen sich diese Ladestationen nicht an Nutzerwünsche anpassen. Eine Skalierung der Ladestationen ist ebenfalls kompliziert.
Aus diesem Grunde lag dem Gegenstand die Aufgabe zugrunde, das elektrische Laden von Geräten zu vereinfachen, insbesondere die Flexibilität von Ladestationen hinsichtlich ihrer Funktionalität und Wartbarkeit zu erhöhen.

Diese Aufgabe wird durch ein System, ein Verfahren und ein Zentralrechner nach den unabhängigen Ansprüchen gelöst.

Es ist erkannt worden, dass die "Intelligenz" der Ladestation nicht innerhalb der Ladestation vorhanden sein muss, sondern in einem Zentralrechner. Aus diesem Grunde verfügt das System zunächst über eine Ladestation. Eine Ladestation ist in der Regel ein Ladeterminal, welches über ein Kabel mit einem Gerät zum Laden verbunden werden kann.

Innerhalb der Ladestation sind Einrichtungen vorgesehen. Einrichtungen innerhalb der Ladestation sind solche Apparate, die die Funktionalität der Ladestation unterstützen, wie beispielsweise ein Stromanschluss, ein Schalter, ein Messgerät oder dergleichen. Die Einrichtungen unterstützen die Ladestation bei dem Ladevorgang der Geräte insofern, als dass mit den Einrichtungen ein Ladevorgang abgewickelt werden kann. So kann eine Einrichtung beispielsweise ein Schalter sein, der den Ladestrom zu- und abschaltet. Eine weitere Einrichtung kann eine Messeinrichtung sein, die die zur Verfügung gestellte Energie misst. Auch kann eine Einrichtung ein Display sein, über das Benutzerinformationen ausgegeben werden können und Benutzer beispielsweise Daten eingeben kann.

Die genannten Einrichtungen als auch weitere Einrichtungen können beim Ladevorgang notwendig werden, abhängig von Anforderungen an die Ladestation. Aus diesem Grunde sind alle Einrichtungen, die eine Ladestation bei einem Ladevorgang unterstützen dieser Ladestation zugeordnet.

Es ist jedoch erkannt worden, dass die "Intelligenz" der Einrichtungen nicht in den Einrichtungen selbst oder der Ladestation vorhanden sein muss, sondern zentral vorgehalten werden kann. Aus diesem Grunde weisen die gegenständlichen Ladestationen vorzugsweise eine Kommunikationseinrichtung auf. Mit Hilfe der Kommunikationseinrichtung kann die Ladestation mit einem räumlich von der Ladestation entfernten Zentralrechner (Rechenzentrum) kommunizieren.

In diesem Zusammenhang sei erwähnt, dass jede einzelne Einrichtung in der Ladestation eine Ende-zu-Ende Kommunikation mit dem Zentralrechner aufbauen kann. Hierzu kann die Einrichtung die Kommunikationseinrichtung verwenden. Wenn nachfolgend davon gesprochen wird, dass die Ladestation mit dem Zentralrechner kommuniziert, dann kann damit auch gemeint sein, dass eine jeweilige Einrichtung in der Ladestation mit dem Zentralrechner kommuniziert. Wenn nachfolgend davon gesprochen wird, dass der Zentralrechner mit der Ladestation kommuniziert, dann kann damit auch gemeint sein, dass der Zentralrechner mit einer jeweilige Einrichtung in der Ladestation kommuniziert.

In dem Zentralrechner kann ein Abbild der Ladestation in Form eines Ladestationsobjekts gespeichert sein. Das Ladestationsobjekt bildet virtuell die Ladestation nach und ergänzt diese um Funktionen, die auf Regeln und Zustandsänderungen von Einrichtungen der Ladestation beruhen. Mit Hilfe des Ladestationsobjekts lassen sich Zustände und Funktionen innerhalb der Ladestation emulieren als auch realisieren. Die realisierten Funktionen führen zu Zustandsänderungen, die von einem Ladestationsobjekt an die Ladestation bzw. die Einrichtungen übermittelt werden, so dass in den Einrichtungen die entsprechenden Zustände an die im Zentralrechner ermittelten Zustände angepasst werden. Der tatsächliche Zustand einer Ladestation wird somit einem in dem Zentralrechner bestimmten Zustand nachgeführt.

Um die der Ladestation zugeordneten Einrichtungen in dem Zentralrechner ebenfalls repräsentieren zu können, wird vorgeschlagen, dass das Ladestationsobjekt die Einrichtung repräsentierende Einrichtungsobjekte aufweist. Einrichtungsobjekte können die der Ladestation zugeordneten Einrichtungen virtuell nachbilden und diese emulieren als auch Funktionen realisieren. Die realisierten Funktionen führen zu Zustandsänderungen, die von einem Einrichtungsobjekt an die Einrichtungen übermittelt werden, so dass in den Einrichtungen die entsprechenden Zustände an die im Zentralrechner ermittelten Zustände angepasst werden. Der tatsächliche Zustand einer Einrichtung wird somit einem in dem Zentralrechner bestimmten Zustand nachgeführt.

Ein Ladestationsobjekt als auch ein Einrichtungsobjekt kann in der Form einer Instanz eines Objektes implementiert sein. Das heißt, dass für jede physikalisch vorhandene Ladestation genau ein Ladestationsobjekt instanziiert sein kann. Ferner kann für jede Einrichtung, die einer vorhandenen Ladestation zugeordnet ist, ein Einrichtungsobjekt instanziiert sein und dem Ladestationsobjekt zugeordnet bzw. in diesem enthalten sein.

Nachfolgend werden die Begriffe Ladestationsobjekt und Instanz eines Ladestationsobjekt sowie Einrichtungsobjekt und Instanz eines Einrichtungsobjekte verwendet, wobei dieses Begriffe abhängig von einer tatsächlichen Implementierung synonym sein können.

Mit Hilfe des Ladestationsobjekts als auch der Einrichtungsobjekte ist es möglich, das Verhalten der Ladestation in dem Zentralrechner nachzubilden als auch Funktionen der Ladestation in dem Zentralrechner zur Verfügung zu stellen. Das bedeutet, dass die Ladestation selbst keine "Intelligenz" haben muss, sondern lediglich den physikalischen Ladepunkt zur Verfügung stellt. Die Interaktion der einer Ladestation zugeordneten Einrichtungen untereinander als auch beispielsweise das Freigeben eines Ladestroms, die Steuerung einer Benutzerschnittstelle, die Überwachung der Freigabe eines Ladestroms, die Überwachung der bezogenen Energiemenge, das Sperren eines Ladestroms oder dergleichen, was ein gewisses Maß an Intelligenz erfordert und ein Überwachen der Zustände der Einrichtungen verlangt, kann gegenständlich in dem Zentralrechner bzw. dem Ladestationsobjekt erfolgen.

Um die Zustände der Einrichtungen zu überwachen als auch zu verändern, wird vorgeschlagen, dass das Ladestationsobjekt vorzugsweise über die Kommunikationseinrichtung mit den Einrichtungen kommuniziert, derart, dass die Einrichtungsobjekte zumindest Zustandsinformationen mit den Einrichtungen austauschen. In diesem Zusammenhang sind Zustandsinformationen als beispielsweise solche Informationen zu verstehen, die Auskunft über den Zustand einer Einrichtung geben. Bei einem Schalter kann eine Zustandsinformation beispielsweise "geöffnet" oder "geschlossen" sein. Bei einem Messgerät kann eine Zustandsinformation beispielsweise ein aktueller Zählerstand, ein Anfangszählerstand, ein Endzählerstand, eine Ortszeitinformation, eine Kennung, eine Signatur, ein Status des Messgeräts oder dergleichen sein.

Diese Zustandsinformationen können zwischen der Ladestation oder den Einrichtungen und dem Zentralrechner ausgetauscht werden. Anhand der vorhandenen Zustandsinformationen können die Ladestationsobjekte bzw. die Einrichtungsobjekte ebenfalls ihre Zustände ändern und gegebenenfalls Funktionen in anderen Einrichtungen oder anderen Ladestationen auslösen. Hierzu wird in dem Zentralrechner anhand der Zustandsinformationen eine Logik ausgeführt, derart, dass anhand der Logik und vorhandenen Zustandsinformationen Zustände von Einrichtungsobjekten errechnet werden und diese neuen Zustände an die Einrichtungen übertragen werden.

Gegenständlich ist es möglich, dass eine Ladestation nicht nur aus der innerhalb der Ladestation angeordneten Einrichtungen gebildet wird, sondern auch aus räumlich von der Ladestation entfernten Einrichtungen. Das bedeutet, dass beispielsweise ein Kassenautomat (Geldautomat), der entfernt von einer Ladestation steht, dieser zugeordnet sein. In diesem Fall kann in dem Zentralrechner ein Einrichtungsobjekt, das den Kassenautomat repräsentiert, instanziiert werden und diese Instanz des Objektes dem entsprechenden Ladestationsobjekt zugeordnet werden. Wenn nun ein Zahlvorgang tatsächlich an dem Kassenautomat erfolgt, kann dieser Zahlvorgang der Ladestation zugeordnet werden, wobei im Zentralrechner in dem Einrichtungsobjekt, welches den Kassenautomat präsentiert, das Vorhandensein der Zahlung überwacht wird und bei vorliegender Zahlung in dem Ladestationsobjekt signalisiert wird, dass der Zahlvorgang abgeschlossen ist.

Ein weiteres Beispiel kann beispielsweise sein, dass eine Benutzerschnittstelle mittels einer Applikation, beispielsweise einer Internetapplikation, einer Internetseite, oder einer Telefonapplikation realisiert wird. Ein Nutzer, der die Ladestation nutzt, kann sein Telefon als Nutzerschnittstelle der von ihm benutzten Ladestation nutzen, wobei in dem Zentralrechner die Oberfläche des Mobiltelefons bzw. die auf dem Mobiltelefon laufende Applikation als Einrichtungsobjekt der jeweiligen Ladestation zugeordnet wird. Nutzerinformationen können dann über dieses Einrichtungsobjekt eingestellt werden und über das Mobiltelefon ausgegeben werden. Auch können Nutzereingaben an dem Mobiltelefon in dem Einrichtungsobjekt empfangen werden und anhand der Benutzereingaben können in dem Ladestationsobjekt Zustände verändert werden, wie beispielsweise die Freigabe eines Ladestroms bei einer erfolgten Nutzerauthentifizierung.

Somit kann eine Ladestation aus räumlich innerhalb der Ladestation als auch aus räumlich von der Ladestation entfernten Einrichtungen gebildet sein, wobei in dem Zentralrechner eine solche Ladestation als Instanz eines Ladestationsobjekts repräsentiert sein kann. In dem Ladestationsobjekt oder der Instanz davon können die jeweiligen Einrichtungsobjekte oder Instanzen davon vorhanden sein. Innerhalb des Zentralrechners wird eine Ladestation aus verschiedenen Einrichtungen zusammengesetzt, obwohl die Einheiten auch räumlich von der Ladestation entfernt sein können. Die Ladestation wird als funktionale Einheit betrachtet. Die tatsächlichen Einrichtungen, die die gesamte Ladestation realisieren, können jedoch räumlich verteilt sein und Ein- und/oder Ausgaben auf den unterschiedlichen tatsächlichen Einrichtungen auch abhängig von den Zuständen der Einrichtungsobjekte erfolgen.

Wesentliche, für den Ladevorgang essentielle Einrichtungen sind gegenständlich vorzugsweise innerhalb der Ladestation eingerichtet. So wird vorgeschlagen, dass zumindest eine innerhalb der Ladestation angeordnete Einrichtung ein Schalter zum Zu- und Abschalten der über die Ladestation bereitgestellten elektrischen Energie ist. Ein solcher Schalter ist wesentlich für die Ladefunktion und somit innerhalb der Ladestation angeordnet. Ein weiteres wesentliches Merkmal eines Ladevorgangs ist zum Beispiel das Messen der bezogenen Energie. Aus diesem Grunde kann eine zweite innerhalb der Ladestation angeordnete Einrichtung ein Messgerät zum Messen von über die Ladestation bereitgestellter elektrischer Energie sein. Mit Hilfe der Messeinrichtung (Zählgerät, Smartmeter, Stromzähler), wird die an das Gerät abgegebene elektrische Energie gemessen. Ein Anfangs- als auch ein Endwert des Zählers kann an Zentralrechner übertragen werden.

Um eingehende Nachrichten auf dem Zentralrechner identifizieren zu können, wird vorgeschlagen, dass die Kommunikationseinrichtung eine eindeutige Kennung aufweist. Zumindest alle innerhalb einer Ladestation angeordneten Einrichtungen kommunizieren bevorzugt über die Kommunikationseinrichtung der Ladestation. Fügt die Kommunikationseinrichtung einer solchen Kommunikationsnachricht ihre eindeutige Kennung zu, kann der Zentralrechner zumindest erkennen, von welcher Ladestation die Information stammt. Andererseits kann der Zentralrechner eine Ladestation eindeutig adressieren, indem die eindeutige Kennung der Kommunikationseinrichtung verwendet wird. Eine Kennung kann z.B. eine IP Adresse sein.

Auf der anderen Seite kann innerhalb einer Ladestation auch eine Einrichtung vorgesehen sein, die die Ladestationskennung beinhaltet. Dies kann beispielsweise ein Trusted Platform Module (TPM) sein, mit dessen Hilfe eine gesicherte Kommunikation zwischen der Ladestation bzw. der Kommunikationseinrichtung der Ladestation und dem Zentralrechner gewährleistet sein kann.

Eine Ladestationskennung, mit deren Hilfe eine Ladestation eindeutig gekennzeichnet werden kann, kann beispielsweise zumindest teilweise aus der eindeutigen Kennung der Kommunikationseinrichtung und/oder einer Messgerätekennung gebildet sein. Eine Messgerätekennung kann dabei eine Kennung der innerhalb der Ladestation angeordneten Messeinrichtung sein. Enthält die Ladestationskennung zumindest Teile der Messgerätekennung, kann eine Absicherung der Messwerte gegenüber Manipulationen erfolgen, indem beispielsweise ein übertragener Messwert mit der Messgerätekennung signiert wird.

Empfängt der Zentralrechner Zustandsinformationen, sind diese in der Regel entweder mit der Ladestationskennung und/oder der Kennung der Kommunikationseinrichtung versehen. Anhand dieser Kennungen ist es möglich, dass der Zentralrechner die Zustandsinformationen einem Ladestationsobjekt zuordnet. Dies ist beispielsweise dann möglich, wenn bei der Instanziierung eines Ladestationsobjekts diesem Ladestationsobjekt die Ladestationskennung oder eine Kennung einer Kommunikationseinrichtung der entsprechenden Ladestation zugeordnet und dort gespeichert wird. Nachfolgende Kommunikation enthält ebenfalls diese Information, so dass innerhalb des Zentralrechners stets die Möglichkeit besteht, die Kommunikation einem Ladestationsobjekt zuzuordnen.

Auf der anderen Seite kann der Zentralrechner mit Hilfe der eindeutigen Kennung der Kommunikationseinrichtung oder der Ladestationskennung eine Zustandsinformation an die betreffende Ladestation übertragen. Verändern sich beispielsweise aufgrund von Ereignissen innerhalb des Ladestationsobjekts Zustände von Einrichtungsobjekten (z.B. durch geänderte Werte von Variablen), können diese Zustände an die Ladestation oder die Einrichtung übertragen werden, so dass die Ladestation oder die Einrichtung ihren tatsächlichen Zustand entsprechend anpasst.

Um eine Kommunikation zwischen einem Einrichtungsobjekt und einer Einrichtung zu gewährleisten, wird vorgeschlagen, dass eine der Ladestation zugeordnete Einrichtung zumindest eine Einrichtungskennung aufweist. Eine Instanz eines Einrichtungsobjekts kann ebenfalls bei der Instanziierung eine Einrichtungskennung speichern, so dass eine 1:1 Beziehung zwischen einer Instanz eines Einrichtungsobjekts und einer Einrichtung besteht und eine Kommunikation zwischen diesen beiden möglich ist.

Eine Einrichtungskennung kann zumindest teilweise aus der eindeutigen Kennung der Kommunikationseinrichtung und/oder der Ladestationskennung gebildet sein. In diesem Fall kann eine Kommunikation von einer Einrichtung zunächst einem Ladestationsobjekt anhand der Kennung der Kommunikationseinrichtung der Ladestationskennung zugeordnet werden und anschließend dem in diesem Objekt enthaltenen Einrichtungsobjekt.

Auch kann eine Einrichtungskennung eine IP Adresse sein. Insbesondere bei der Verwendung eines IPv6 Protokolls kann jeder Einrichtung eine eindeutige IP Adresse zugeordnet werden.

Auch wird vorgeschlagen, dass der Zentralrechner die Einrichtungskennung bei einer Kommunikation mit einer Einrichtung empfängt und mit Hilfe der Einrichtungskennung die empfangene Information einem Einrichtungsobjekt zuordnet.

Wie eingangs bereits erläutert, kann eine Einrichtung auch außerhalb der Ladestation und räumlich von dieser entfernt angeordnet sein. Um eine Kommunikation mit einer solchen Einrichtung zu ermöglichen, wird vorgeschlagen, dass der Zentralrechner einer räumlich außerhalb der Ladestation angeordnete Einrichtung ein Einrichtungsobjekt zuordnet und dieses Einrichtungsobjekt einem Ladestationsobjekt zuordnet. Beispielsweise bei der Instanziierung eines Einrichtungsobjekts kann die Einrichtungskennung verwendet werden um diese in der Instanz des Einrichtungsobjekts zu speichern. Eine darauffolgende Kommunikation von der Einrichtung enthält ebenfalls die Einrichtungskennung und der Zentralrechner kann dann beispielsweise in einer Datenbank prüfen, zu welchem Ladestationsobjekt die entsprechende Einrichtung zugeordnet ist.

Gemäß einem vorteilhaften Ausführungsbeispiel kann eine Einrichtung beispielsweise ein Kartenlesegerät sein. Ein Kartenlesegerät kann beispielsweise zur Zahlung von bezogener Energie verwendet werden. Auch kann das Kartenlesegerät zur Identifikation des Nutzers genutzt werden. Ein Kartenlesegerät kann beispielsweise innerhalb der Ladestation angeordnet sein. Auch ist es möglich, dass ein Kartenlesegerät für eine Mehrzahl von Ladestationen verwendet wird und die diesem Kartenlesegerät zugeordneten Instanzen des entsprechenden Einrichtungsobjekts jeweils einem Ladestationsobjekt zugeordnet werden.

Eine Einrichtung kann auch ein Display sein. Ein berührungsempfindliches Display kann eine Nutzerschnittstelle darstellen, die Ausgaben als auch Eingaben ermöglicht. Ein solches Display kann unmittelbar an der Ladestation angeordnet sein. Auch kann ein Display, wie eingangs bereits erläutert, durch eine Applikation für einen mobilen Computer realisiert sein. Andererseits kann ein Display beispielsweise auch Zustandsinformationen darstellen. In diesem Fall kann beispielsweise auf einem einzelnen Computer, der entfernt von einer Mehrzahl von Ladestationen ist, ein Display für jede der Ladestationen angezeigt werden und somit mit einem einzigen Computer der Zustand mehrerer Ladestationen überwacht werden.

Eine Abfrage einer Nutzerkennung kann beispielsweise durch ein Nahfunkkommunikationsgerät gewährleistet sein. Dieses kann beispielsweise mittels Bluetooth oder RFID oder eines sonstigen Nachfunkprotokolls eine Nutzeridentifikation auslesen und somit eine nutzerbezogene Abrechnung ermöglichen.

Ein Münzautomat oder Geldautomat ist ebenfalls eine mögliche Einrichtung, die einen Zahlvorgang ermöglicht. Für einen einzelnen Münzautomat können mehrere Instanzen eines entsprechenden Einrichtungsobjekts jeweils einem Ladestationsobjekt zugeordnet werden. Somit kann mit einem einzelnen Geldautomat die Zahlung von über unterschiedliche Ladestation zu beziehende Energie erfolgen. Im Zentralrechner kann der jeweilige Zahlvorgang einem Ladestationsobjekt zugeordnet werden und entsprechend eine Ladefreigabe an dem in diesem Ladestationsobjekt enthaltenen Einrichtungsobjekt für den Schalter erfolgen. Diese Ladefreigabe führt zu einer Zustandsänderung des Einrichtungsobjekts, welche anschließend an die zugeordnet Einrichtung, hier den Schalter der Ladestation, übermittelt wird.

Innerhalb der Ladestation ist die elektrische Sicherheit von entscheidender Bedeutung. Insofern ist innerhalb der Ladestation ein Sicherungsautomat vorgesehen, der bei einem Überstrom abschaltet. Der Zustand des Sicherungsautomaten kann in einem zugehörigen Einrichtungsobjekt überwacht werden.

Auch ein Schütz kann vorgesehen sein, mit dem der Ladestrom zu- und abgeschaltet werden kann. Das Zu- und Abschalten kann in dem zugehörigen Einrichtungsobjekt erfolgen, in dem dessen Zustand verändert wird und anschließend an den tatsächlichen Schütz übertragen wird.

Eine weitere Einrichtung kann ein Belegdrucker sein, der entweder in der Ladestation oder außerhalb dieser angeordnet ist.

Eine weitere Einrichtung kann beispielsweise ein Lastsensor sein. Mit Hilfe eines Lastsensors lässt sich beispielsweise die Last innerhalb des Stromverteilnetzes sensieren. Mehrere Instanzen von Einrichtungsobjekten für einen Lastsensor können instanziiert sein und je eine Instanz davon einem Ladestationsobjekt zugeordnet sein. In diesem Fall besteht die Möglichkeit, anhand des Lastsensors die elektrische Last innerhalb des Stromverteilnetzes zu erfassen. Überschreitet die elektrische Last einen bestimmten Wert, kann es notwendig werden, den Ladestrom in einzelnen oder allen Ladestationen abzuschalten. In diesem Fall würden die Instanzen der Einrichtungsobjekte des Lastsensors ein Überschreiten einer maximalen Last innerhalb des Ladestationsobjekts indizieren. Das Ladestationsobjekt könnte daraufhin den Zustand des Einrichtungsobjekts für einen Schalter auf geöffnet ändern. Dieser geänderte Zustand des Einrichtungsobjekts für den Schalter könnte an die entsprechende Einrichtung innerhalb einer Ladestation übertragen werden und der Schalter würde sich öffnen.

Auf der andere Seite ist es beispielsweise möglich, dass bestimmten Kunden auch bei hoher Last Ladekapazität zur Verfügung gestellt wird und anderen Kunden, die nur einen geringen Energiepreis zahlen wollen, nur bei Niedriglast. Dies kann dadurch abgebildet sein, dass mittels der Instanz des Lastsensorobjekts die elektrische Gesamtlast in jedem Ladestationsobjekt bekannt ist. Wenn in dem Ladestationsobjekt dann noch bekannt ist, welcher Nutzer an der Ladestation gerade lädt, kann das Ladestationsobjekt entscheiden, ob dem entsprechenden Nutzer elektrische Energie weiterhin zur Verfügung gestellt wird oder nicht. Entsprechend kann das Ladestationsobjekt dann den Ladestrom zu- und abschalten, indem sich der Zustand des den Schalter repräsentierten Einrichtungsobjekts auf geöffnet geändert wird und entsprechend diese Zustandsinformation an die entsprechende Ladestation bzw. den entsprechenden Schalter übertragen wird.

Eine Lastprognoseeinrichtung kann ebenfalls eine Einrichtung sein. Mit dieser Lastprognoseeinrichtung ist es möglich, eine Lastprognose abzugeben und abhängig von der Lastprognose kann in den Ladestationsobjekten ein Ladestrommanagement erfolgen, anhand dessen der Ladestrom in der tatsächlichen Ladestation reduziert werden kann. Hierzu kann ein Zustand eines Einrichtungsobjekts für ein Lademanagement verändert werden, wobei dieser Zustand dann an den entsprechenden Lademanager übertragen wird.

Eine Leistungsprognoseeinrichtung kann beispielsweise abhängig von einem Ladezustand einer Batterie eines an eine Ladestation angeschlossenen Gerätes prognostizieren, welche Leistung zukünftig notwendig wird. Anhand der prognostizierten Leistung kann die Netzlast prognostiziert werden.

Eine weitere Einrichtung kann beispielsweise ein Batteriesensor sein. Mit Hilfe eines Batteriesensors läßt sich der Zustand einer Batterie erfassen und gegebenenfalls der Ladestrom zu- und abschalten. Die Entscheidung, ob ein Ladestrom zu- und abgeschaltet wird, wird dabei jedoch nicht in der Ladestation selbst getroffen, sondern in dem Ladestationsobjekt bzw. in dem den Batteriesensor repräsentierenden Einrichtungsobjekt bzw. der Instanz hiervon.

Ein AC-DC-Wandler kann beispielsweise dazu genutzt werden, den Ladestrom in Gleichstrom zu wandeln. Hierdurch ist beispielsweise ein Schnellladen möglich. Die Steuerung eines solchen Wandlers kann durch das entsprechende Einrichtungsobjekt erfolgen. Somit werden von dem Einrichtungsobjekt lediglich Zustandinformationen an den tatsächlichen AC-DC Wandler übertragen.

Ein Flottensensor kann beispielsweise ein solcher Sensor sein, der die aktuelle Last aller Geräte einer bestimmten Gruppe erfasst. Für den Fall, dass Stromlieferverträge für eine Flotte an Fahrzeugen bestehen, kann mittels des Flottensensors überwacht werden, ob eine Maximallast einer Flotte erreicht ist. Ein Flottensensor kann beispielsweise lediglich innerhalb des Zentralrechners realisiert sein und die kumulierte Last aller Ladestationsobjekte erfassen, an denen Nutzer einer bestimmten Flotte aktuell laden. Der Flottensensor kann dann ein Überschreiten oder Unterschreiten einer Maximallast indizieren und innerhalb der Ladestationsobjekte, in denen der Flottensensor instanziiert ist, kann eine entsprechende Maßnahme getroffen werden, die die Last der Flotte unterhalb der Maximallast reduziert.

Eine weitere Einrichtung ist beispielsweise ein Mobiltelefon, über das eine Nutzerschnittstelle realisiert werden kann.

Ebenfalls lassen sich Nutzerschnittstellen über eine Internetseite oder ein Internetterminal realisieren.

Eine zusätzliche Einrichtung kann beispielsweise eine Ladesteuerschaltung sein, mit der der Ladestrom reguliert werden kann, um ein optimales Ladeergebnis bei bekanntem Ladezustand der Batterie zu erzielen. Insbesondere kann ein Batterie schonendes Laden oder ein Schnellladen mittels der Ladesteuerschaltung überwacht werden.

Ferner ist ein intelligenter Energiezähler eine Einrichtung, mit der nicht nur eine aktuelle Last an einer Ladestation gemessen werden kann, sondern eine Lastganglinie erfasst werden kann und entsprechende Maßnahmen eingeleitet werden.

Den genannten als auch weiteren Einrichtungen können jeweils hierfür programmierte Einrichtungsobjekte zugeordnet sein. Die Einrichtungsobjekte repräsentieren dann die jeweiligen Einrichtungen und Instanzen davon können jeweils einem Ladestationsobjekt zugeordnet werden, abhängig davon, ob der Ladestation eine solche Einrichtung zugeordnet ist.

Wenn eine Ladestation aufgestellt wird, kann diese initialisiert werden. Sobald die Ladestation in Betrieb genommen wird, kann sich die Kommunikationseinrichtung der Ladestation am Zentralrechner anmelden. Bei dieser Anmeldung am Zentralrechner kann der Zentralrechner überprüfen, ob eine entsprechende Instanz eines Ladestationsobjekts bereits vorliegt. Falls nicht, kann in dem Zentralrechner eine neue Instanz eines Ladestationsobjekts angelegt werden und in dieser Instanz kann beispielsweise die Kennung der Kommunikationseinrichtung und/oder eine Ladestationskennung und Einrichtungskennungen gespeichert werden. Hierzu kann die Kommunikationseinrichtung bei der Initialisierung ihre eigene Kennung, die Ladestationskennung und/oder die Einrichtungskennungen der in der Ladestation angeordneten Einrichtungen an den Zentralrechner übertragen. Sobald das Ladestationsobjekt und die entsprechenden Einrichtungsobjekte angelegt sind, ist in dem Zentralrechner ein "virtuelles" Abbild einer tatsächlichen Ladestation angelegt.

In dem Zentralrechner kann dann mit diesem die Ladestation repräsentierenden Objekt das Verhalten der Ladestation emuliert werden. Ferner kann das Verhalten der Ladestation gesteuert werden und Einrichtungen in der Ladestation können ihre Zustände abhängig von in dem Zentralrechner hinterlegten Regeln bzw. in dem Ladestationsobjekt hinterlegten Regeln gesteuert werden.

Gemäß einem vorteilhaften Ausführungsbeispiel wird vorgeschlagen, dass der Zentralrechner bei einer Initialisierung der Ladestation eine die Ladestation repräsentierende Instanz eines Ladestationsobjekts erstellt. Diese Instanz ist dann eine 1:1 Zuordnung zu einer Ladestation und mit Hilfe dieser Instanz kann die Ladestation "virtualisiert" werden.

Innerhalb eines Ladestationsobjekts sind vorzugsweise zumindest zwei Instanzen von Einrichtungsobjekten enthalten. Eine erste Instanz eines Einrichtungsobjekts kann beispielsweise ein Einrichtungsobjekt für einen Schalter sein. Eine zweite Instanz für ein Einrichtungsobjekt kann beispielsweise ein Einrichtungsobjekt für ein Messgerät sein. Es ist erkannt worden, dass diese beiden wesentlichen Einrichtungen innerhalb einer Ladestation vorhanden sein sollten und entsprechende Objekte in dem Ladestationsobjekt angelegt sein sollten.

Gemäß einem vorteilhaften Ausführungsbeispiel wird vorgeschlagen, dass der Zentralrechner bei einem Empfang einer Information von einer Einrichtung mit Hilfe der Einrichtungskennung die Ladestation ermittelt, in der die Einrichtung angeordnet ist. Da bei der Initialisierung des Ladestationsobjekts und der Einrichtungsobjekte die Kennungen der Einrichtungen als auch der Ladestation in den entsprechenden Objekten bzw. Instanzen abgelegt wurden, kann eine empfangene Information der entsprechenden Instanz eines Objekts zugeordnet werden.

Gemäß einem vorteilhaften Ausführungsbeispiel wird vorgeschlagen, dass der Zentralrechner eine Instanz eines Einrichtungsobjekts der Instanz des Ladestationsobjekts zuordnet, welches die ermittelte Ladestation repräsentiert. Eingehende Informationen können in dem Zentralrechner zunächst auf das Vorhandensein einer Ladestationskennung oder einer Kennung einer Kommunikationseinrichtung überprüft werden. Anhand dieser Information kann die Instanz des Ladestationsobjekts bestimmt werden, welches die Ladestation repräsentiert, von der die Information stammt. Anschließend kann die Einrichtungskennung aus der Kommunikation entnommen werden und die in der Information enthaltenen Zustandsinformationen der Instanz des entsprechenden Einrichtungsobjekts zugeordnet werden.

Häufig kann es vorkommen, dass eine einzige Einrichtung beispielsweise für eine Mehrzahl von Ladestationen notwendige oder hilfreiche Informationen bereitstellen kann. Dies kann beispielsweise ein Lastsensor sein. In diesem Fall ist es beispielsweise möglich, dass Instanzen eines Einrichtungsobjekts für eine selbe Einrichtung jeweils einem Ladestationsobjekten zugeordnet sind.

So können für eine einzige Einrichtung mehrere Instanzen von Einrichtungsobjekten angelegt sein. Zum Beispiel kann ein Sensor eine Leistungsprognose oder eine Leistungsmessung von regenerativen Energiequellen zur Verfügung stellen. Das Ergebnis dieser Messung kann dazu verwendet werden, um bestimmten Kunden Ladestrom zur Verfügung zu stellen, anderen hingegen nicht. Diese Information ist somit in einer Mehrzahl von Ladestationen relevant, so dass Instanzen des Einrichtungsobjekts für diesen Sensor in einer Mehrzahl von Ladestationsobjekten hinterlegt sein können.

Gemäß einem vorteilhaften Ausführungsbeispiel wird vorgeschlagen, dass der Zentralrechner innerhalb eines Einrichtungsobjekts einen Zustand einer Einrichtung verändert, dass der Zentralrechner den veränderten Zustand vorzugsweise an die Kommunikationseinrichtung übermittelt und dass die der Ladestation zugeordnete Einrichtungen ihren korrespondierenden physikalischen Zustand entsprechend verändert.

Die Funktionalität der Ladestation wird somit in dem Zentralrechner bereitgestellt. Jegliche Entscheidung über Zustände der einer Ladestation zugeordneten Einrichtung werden in dem Zentralrechner getroffen und die Ergebnisse dieser Entscheidung als Zustandsinformation an die entsprechende Einrichtung übertragen. Die Einrichtung verändert dann lediglich den Zustand in den empfangenen, eine weitere Funktionalität ist in der Einrichtung jedoch nicht notwendig.

Um dem Zentralrechner bzw. dem Ladestationsobjekt zu ermöglichen, die Funktion einer Ladestation nachzubilden bzw. bereitzustellen, wird vorgeschlagen, dass eine Einrichtung ihren physikalischen Zustand zusammen mit zumindest der Einrichtungskennung vorzugsweise mittels der Kommunikationseinrichtung an den Zentralrechner übermittelt. Anhand der empfangenen Zustandsinformationen kann zum einen in dem Zentralrechner der tatsächliche Zustand einer Ladestation bzw. der dieser zugeordneten Einrichtungen nachgebildet werden. Andererseits können abhängig von den Zustandsinformationen Entscheidungen über den Ladevorgang in dem Zentralrechner bzw. der Instanz des Ladestationsobjekts getroffen werden und die Ergebnisse der Entscheidung als Zustandsinformation an die jeweilige Ladestation bzw. die dieser zugeordneten Einrichtungen zurück übermittelt werden.

Gemäß einem vorteilhaften Ausführungsbeispiel wird vorgeschlagen, dass der Zentralrechner anhand der Einrichtungskennung das das zur Einrichtung korrespondiere Einrichtungsobjekt aufweisende Ladestationsobjekt ermittelt. In dem Zentralrechner kann beispielsweise in einer Liste hinterlegt sein, welche Einrichtung in welcher Ladestation vorhanden bzw. welche Ladestation zugeordnet ist. Ist in einer empfangenen Information eine Einrichtungskennung enthalten, kann der Zentralrechner in dieser Liste überprüfen, welchem Ladestationsobjekt diese Einrichtung zugeordnet ist und entsprechend das Ladestationsobjekt ermitteln.

Gemäß einem vorteilhaften Ausführungsbeispiel wird vorgeschlagen, dass der Zentralrechner anhand der Einrichtungskennung das zur Einrichtung korrespondierende Einrichtungsobjekt ermittelt. Dies ist notwendig, um die Zustände innerhalb des Einrichtungsobjekts an die tatsächlichen Zustände einer Einrichtung anzupassen.

Gemäß einem vorteilhaften Ausführungsbeispiel wird vorgeschlagen, dass das Einrichtungsobjekt seinen Zustand mit Hilfe von empfangenen Zustandsinformationen der Einrichtung anpasst. Dies ermöglicht ein Nachbilden der physikalischen Zustände der Einrichtungen innerhalb des Ladestationsobjekts, so dass in dem Zentralrechner stets bekannt ist, in welchem Zustand sich eine jeweilige Ladestation bzw. die ihr zugeordneten Einrichtungen befinden.

Gemäß einem vorteilhafte Ausführungsbeispiel wird vorgeschlagen, dass die Kommunikationseinrichtung ein Power-Line-Communication-Protokoll, ein LAN-Protokoll, WLAN-Protokoll, ein Mobilfunkprotokoll, ein GSM-Protokoll, ein UMTS-Protokoll, ein LTE-Protokoll oder ein Richtfunkprotokoll für eine Kommunikation mit dem Zentralrechner unterstützt. Die Kommunikation zwischen dem Zentralrechner und der Ladestation kann auf geeignete Weise realisiert sein, derart, dass die Zustandsinformation zwischen dem Zentralrechner und der Ladestation ausgetauscht werden können.

Gemäß einem vorteilhaften Ausführungsbeispiel wird vorgeschlagen, dass Instanzen von jeweils ein Display einer Ladestation repräsentierenden Einrichtungsobjekten eine Ausgabe auf einen gemeinsamen Bildschirm steuern. Wie zuvor bereits erläutert, kann eine Instanz eines Einrichtungsobjekts beispielsweise ein Display repräsentieren. Die Ausgabe einer solchen Instanz muss jedoch nicht auf einem Display, welches in der Ladestation angeordnet ist, erfolgen. Vielmehr kann die Ausgabe auf einem von der Ladestation entfernten Display erfolgen, solange dieses Display der Ladestation bzw. das entsprechende Einrichtungsobjekt dem entsprechenden Ladestationsobjekt zugeordnet ist.

Bei dem genannten Beispiel der Verwendung eines Mobiltelefons ist das Mobiltelefon vorzugsweise nur so lange einer Ladestation zugeordnet, wie die Applikation geöffnet ist bzw. wie der Ladevorgang andauert. In diesem Fall wird vorgeschlagen, dass ein Einrichtungsobjekt für räumlich von der Ladestation getrennte Einrichtungen temporär einem Ladestationsobjekt zugeordnet ist. Ein Nutzer kann beispielsweise eine Ladestationskennung bei einer Anmeldung an dem Zentralrechner angeben und somit bestimmen, welcher Ladestation die auf seinem Gerät laufende Applikation zugeordnet wird. Das entsprechende Einrichtungsobjekt wird dann dem zugehörigen Ladestationsobjekt zugeordnet und die Funktion der Ladestation lässt sich somit über die Applikation steuern und die Ladestation bzw. das Ladestationsobjekt kann über diese Applikation Zustandsinformationen ausgeben. Auch kann der Zentralrechner über diese Applikation den Nutzer zu bestimmten Handlungen auffordern.

Gemäß einem vorteilhaften Ausführungsbeispiel wird vorgeschlagen, dass eine Instanz eines Ladestationsobjekts eine Ladestation samt der Ladestation zugeordneten Einrichtung abbildet.

Auch wird vorgeschlagen, dass ein Ladestationsobjekt Zustandsänderungen innerhalb der Ladestation emuliert. Ferner wird vorgeschlagen, dass ein Einrichtungsobjekt Zustandsänderungen innerhalb einer Einrichtung emuliert. Neben der Emulation der Zustandsänderungen können in den Einrichtungsobjekten und Ladestationsobjekten auch darüber hinausgehende Funktionalitäten realisiert sein, die eine "Intelligenz" in Form eines Mikroprozessors erfordern. Diese Funktionalitäten können dem Zentralrechner zentral zur Verfügung gestellt werden und somit dient der Zentralrechner zur Steuerung einer Vielzahl von Ladestationen.

Ein weiterer Gegenstand ist ein Zentralrechner sowie ein Verfahren zum Betreiben einer Ladestation.

Die zuvor genannten Verfahren können auch als Computerprogramm oder als auf einem Speichermedium gespeichertes Computerprogramm realisiert werden. Hierbei kann ladestationsseitig, einrichtungsseitig und/oder zentralrechnerseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnungen näher erläutert. In der Zeichnung zeigen:
- Fig. 1: ein System zum elektrischen Laden von Geräten mit einem Zentralrechner und einer Ladestation;
- Fig. 2: eine detaillierte Ansicht eines Systems zum Laden von elektrischen Geräten;
- Fig. 3: eine weitere schematische Ansicht eines Systems zum Laden von elektrischen Geräten;
- Fig. 4: eine Darstellung von Objekten und Instanzen.

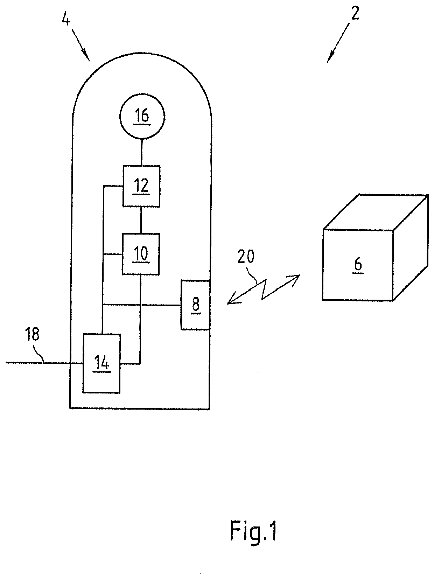

Fig. 1 zeigt ein System 2 zum Laden von elektrischen Geräten. Das System 2 umfasst zum einen eine Mehrzahl von Ladestationen 4, von denen in Fig. 1 nur beispielhaft eine einzige dargestellt ist. Ferner umfasst das System 2 einen Zentralrechner 6.

Eine Ladestation 4 kann Einrichtungen, unter anderem eine Kommunikationseinrichtung 8, einen Schalter 10, ein Strommessgerät 12 und einen gesicherten Stromanschluss 14 aufweisen. Ferner kann die Ladestation 4 eine Ladebuchse 16 aufweisen, über die ein Kabel mit dem zu ladenden Gerät verbunden werden kann.

Bei einem Ladevorgang wird der Schalter 10 geschlossen, so dass Strom über die Leitung 18, den Stromanschluss 14, den Schalter 10 und das Messgerät 12 zur Ladebuchse 16 fließen kann und von dort in das zu ladende Fahrzeug. Mittels des Messgerätes 12 wird die bezogene Energiemenge gemessen. Hierbei kann zum einen ein Anfangszählerstand und ein Endzählerstand gemessen werden und zum anderen eine Differenz hieraus. Die bezogene Energie kann gegebenenfalls einem Kunden in Rechnung gestellt werden.

Bei dem vorliegenden System 2 ist die Ladestation 4 zumindest mit den genannten Einrichtungen ausgestattet. Jede einzelne dieser Einrichtungen 8-14 verfügt über eine eigene Einrichtungskennung. Diese Einrichtungskennung kann beispielsweise eine IP-Adresse sein, insbesondere wenn bei dem vorliegenden System 2 das IPv6 Protokoll verwendet wird. Auch ist es möglich, dass jede Einrichtung 10-14 eine eindeutige Seriennummer zugeordnet bekommt und lediglich die Kommunikationseinrichtung 8 eine eigene IP-Adresse. Eine Kombination aus Serienummer und IP-Adresse ermöglicht die Zuordnung einer Einrichtung 10-14 zu einer Kommunikationseinrichtung 8 und respektive einer Ladestation 4 .

Die Kommunikationseinrichtung 8 steht in Kommunikationsverbindung mit jeder der Einrichtungen 10-14 und kann Zustände der Einrichtung 10-14 erfassen und Zustandsinformationen an die Einrichtungen 10-14 übermitteln.

Der gesamte Entscheidungsprozess hinsichtlich Freigabe des Schalters 10, Überprüfung des Messgeräts 12, der Zuordnung von Messwerten zu Kunden, die Überwachung des Stromanschlusses 14, der Abrechnung und Bezahlung und weiterer Funktionen einer Ladestation 4 erfolgt gegenständlich jedoch in dem Zentralrechner 6.

Hierzu wird über die Kommunikationseinrichtung 8 eine Funkverbindung 20 mit dem Zentralrechner 6 aufgebaut. Beispielhaft ist lediglich die Funkverbindung 20 dargestellt, es versteht sich jedoch, dass jede andere Datenverbindung zwischen der Kommunikationseinrichtung 8 und Zentralrechner 6 möglich ist.

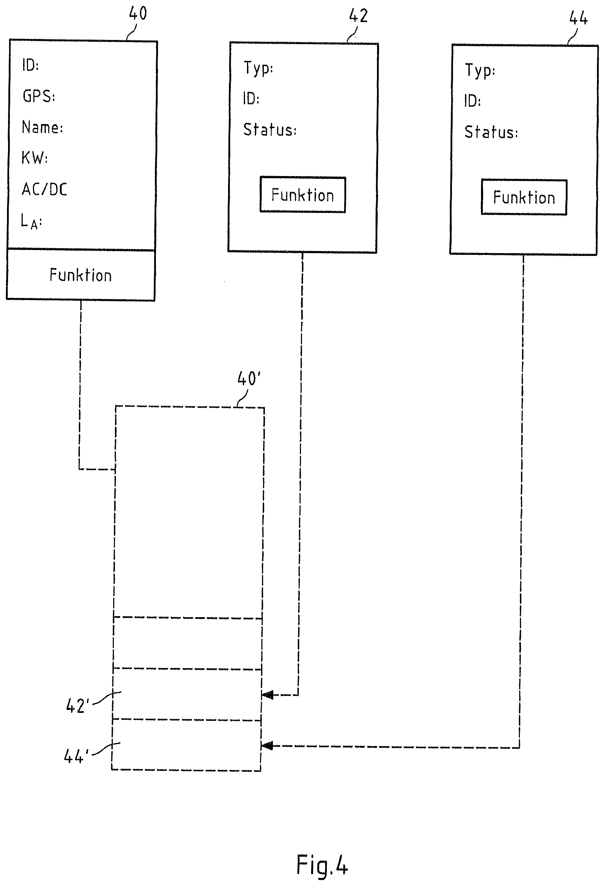

In dem Zentralrechner 6 wird für jede einzelne Ladestation 4 einer Instanz eines Ladestationsobjekts, wie es nachfolgend noch in Zusammenhang mit Fig. 4 dargestellt wird, geladen. Innerhalb eines Ladestationsobjekts, welches eine Ladestation 4 emuliert und Funktionen einer Ladestation 4 realisiert, sind die einzelnen Einrichtungen 10-14 über Einrichtungsobjekte instanziiert. Das heißt, dass innerhalb eines Ladestationsobjekts jeweils eine Instanz eines Einrichtungsobjekts vorhanden sein kann.

Für jeden Typ von Einrichtung kann ein eigenes Einrichtungsobjekt programmiert sein, welches die Funktionen der entsprechenden Einrichtung abbildet und Zustände und Zustandsübergänge dieser Einrichtung repräsentiert.

Im Betrieb wird von der Ladestation 4 über die Kommunikationseinrichtung 8 eine Zustandsinformation über den Zustand einer jeweiligen Einrichtung 10-14 an den Zentralrechner 6 übermittelt. Der Zentralrechner 6 erfasst aus den empfangenen Informationen zunächst die Identifikation der Ladestation 4. Die Identifikation der Ladestation 4 kann dabei eine eigene Adresse der Kommunikationseinrichtung 8 sein. Auch kann die Identifikation der Ladestation 4 durch zumindest einen Teil eines in dem Messgerät 12 zugeordneten Schlüssels umfassen. Mit Hilfe dieser Information kann in dem Zentralrechner 6 die empfangene Zustandsinformation einem Ladestationsobjekt zugeordnet werden und innerhalb des Ladestationsobjekts dem jeweiligen Einrichtungsobjekt. Zustandsinformationen über den Zustand einer außerhalb der Ladestation 4, von dieser entfernt angeordneten Einrichtung kann unmittelbar von der Einrichtung an den Zentralrechner 6 übermittelt werden.

Abhängig von Zustandsinformationen kann in dem Ladestationsobjekt und den Einrichtungsobjekten eine Entscheidung über Zustandsänderungen getroffen werden. Treten Zustandsänderungen innerhalb eines Ladestationsobjekts auf, werden diese entweder über die Funkverbindung 20 an die Kommunikationseinrichtung 8 oder direkt an eine Einrichtung übermittelt. Von der Kommunikationseinrichtung 8 kann die entsprechende in der Ladestation 4 angeordnete Einrichtung 10-14 kontaktiert, so dass sich deren Zustand ändert.

Rein beispielhaft wird eine Ladefreigabe beschrieben. Der Schalter 10 ist geöffnet und diese Zustandsinformation liegt in dem Zentralrechner 6 in dem entsprechenden Einrichtungsobjekt für den Schalter 10 vor. Ein Kunde möchte laden und identifiziert sich gegenüber der Ladestation 4 oder dem Zentralrechner 6 in einer nicht dargestellten Weise. Die Kundenidentifikation wird an den Zentralrechner 6 übermittelt und es wird in dem Zentralrechner festgestellt, dass diese Kundenidentifikation für die Ladestation 4 stattgefunden hat. Das entsprechende Ladestationsobjekt erfasst die Kundenidentifikation, überprüft die Kundenidentifikation und stellt gegebenenfalls fest, dass der identifizierte Kunde einen Ladevorgang auslösen kann.

Daraufhin wird in dem Ladestationsobjekt 6 das Einrichtungsobjekt, welches den Schalter 10 repräsentiert, veranlasst, seinen Zustand in "geschlossen" zu verändern. Diese Zustandsveränderung des Einrichtungsobjekts wird über die Funkverbindung 20 an die Kommunikationseinrichtung 8 übermittelt. Die Kommunikationseinrichtung 8 übermittelt den Befehl "Schließen" an den Schalter 10, der daraufhin geschlossen wird und die neue Zustandsinformation über die Funkverbindung 20 zurück an den Zentralrechner 6 übermittelt. Der Ladevorgang beginnt.

Die Entscheidung, dass der Ladevorgang beginnen kann, ist vorliegend in dem Zentralrechner 6 gefällt worden. Die Ladestation 4 verfügt über keine "Intelligenz", um Funktionen zu steuern bzw. Entscheidungen zu treffen.

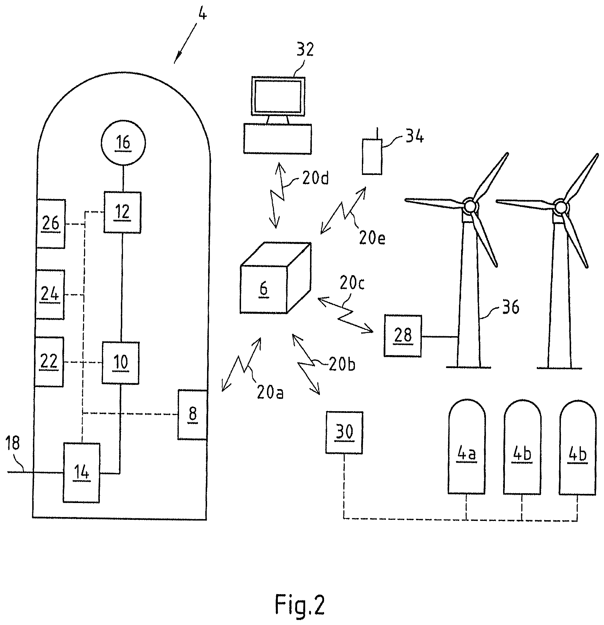

Fig. 2 zeigt ein umfangreicheres System 2 zum Laden von Geräten. Neben der beschriebenen Ladestation 4 und dem Zentralrechner 6 sind in der Ladestation 4 eine Mehrzahl weiterer Einrichtungen 22-26 vorgesehen.

Die Einrichtung 22 kann beispielsweise ein Kartenlesegerät sein. Die Einrichtung 24 kann ein Münzautomat sein. Die Einrichtung 26 kann ein Display sein. Die Einrichtungen 22-26 sind innerhalb der Ladestation 4 angeordnet und verfügen jeweils über eigene Einrichtungskennungen. Jede der innerhalb der Ladestation 4 angeordnete Einrichtung ist über eine Kommunikationsverbindung mit der Kommunikationseinrichtung 8 verbunden.

Neben den in der Ladestation 4 vorhandenen Einrichtungen können weitere Einrichtungen räumlich getrennt von der Ladestation vorhanden sein. Zum Beispiel kann ein Mobiltelefon 34 über eine Funkverbindung 20e mit dem Zentralrechner 6 in Verbindung stehen. Ein Leistungssensor 28, der die Leistung von regenerativen Energiequellen 36 erfasst, kann über die Funkverbindung 20c mit dem Zentralrechner 6 in Verbindung stehen. Ein Flottensensor 30 kann einerseits von einer Vielzahl verschiedener Ladestationen 4A-C abgegebene Leistung erfassen und andererseits über eine Funkverbindung 20b in Kommunikationsverbindung mit dem Zentralrechner 6 stehen. Schließlich kann ein Bildschirm 32 über eine Kommunikationsverbindung 20d mit dem Zentralrechner 6 in Verbindung stehen.

Für jede der genannten Einrichtungen 22-34 können in dem Zentralrechner geeignete Einrichtungsobjekte programmiert sein. Die Einrichtungsobjekte repräsentieren die genannten Einrichtungen jeweils hinsichtlich ihrer Zustände als auch ihrer Funktionalitäten, so dass die Einrichtungsobjekte die entsprechenden Einrichtungen emulieren können und Funktionen von Einrichtungen realisieren können.

Ferner sind in den Einrichtungsobjekten bzw. in dem Ladestationsobjekt Funktionen realisiert, die Zustandsänderungen der jeweiligen Einrichtungsobjekte bzw. des Ladestationsobjekts bewirken können. Diese Zustandsveränderungen können wiederum über die Kommunikationsverbindungen an die entsprechenden Einrichtungen zurückgekoppelt werden.

Bei der Initialisierung der Ladestation 4 überträgt die Kommunikationseinrichtung 8 eine Information über die in der Ladestation 4 verbauten Einrichtungen 10, 12, 14, 22, 24, 26 über die Kommunikationsverbindung 20a an den Zentralrechner 6. In dem Zentralrechner 6 wird anhand dieser Information ein Ladestationsobjekt instanziiert, indem die Einrichtungsobjekte für die entsprechenden Einrichtungen 10-14, 22-26 vorhanden sind. Anschließend werden die Zustände der jeweiligen Einrichtungen 10-14, 22-26 an den Zentralrechner 6 übermittelt, so dass das Ladestationsobjekt bzw. die Einrichtungsobjekte in dem Zentralrechner 6 den aktuellen Zustand der Einrichtungen 10-14, 22-16 repräsentieren.

Dem Ladestationsobjekt kann darüber hinaus beispielsweise eine Instanz eines den Flottensensor 30 repräsentierenden Einrichtungsobjekts zugeordnet werden. Ferner kann eine Instanz eines den Leistungssensor 28 repräsentierenden Einrichtungsobjekts den Ladestationsobjekt zugeordnet werden. Schließlich kann eine Instanz eines den Bildschirm 32 repräsentierenden Einrichtungsobjekts dem Ladestationsobjekt zugeordnet werden als auch ein das Mobiltelefon 34 repräsentierendes Einrichtungsobjekt.

Das Ladestationsobjekt verfügt somit über Instanzen von Einrichtungsobjekten, die innerhalb sowie von außerhalb der Ladestation 4 verbaute Einrichtungen repräsentieren. Die Zuordnung der Einrichtungsobjekte zu dem Ladestationsobjekt kann permanent als auch temporär sein.

Bei einem Ladevorgang kann ein Kunde sich zunächst der Ladestation 4 nähern und sein Fahrzeug über die Ladebuchse 16 anschließen. Anschließend wird er über eine Anzeige an dem Display 26 aufgefordert, sich auszuweisen. Der Kunde kann beispielsweise über das Display 26 bzw. eine dem Display 26 zugeordnete Tastatur eingeben, dass er sich mittels seines Mobiltelefons 34 authentifizieren möchte. Hierzu gibt er beispielsweise seine Mobilfunknummer an. In diesem Fall wird die Information, dass eine Mobilfunknummer angegeben wurde, über die Kommunikationseinrichtung 8 an das entsprechende Ladestationsobjekt in dem Zentralrechner 6 übermittelt.

Das Ladestationsobjekt 6 kann dann temporär ein Einrichtungsobjekt laden, welches ein Mobiltelefon 34 repräsentiert. Diesem Einrichtungsobjekt wird die vom Nutzer eingegebene Mobilfunknummer zugeordnet. Abhängig von der Mobilfunknummer kann dann zum Beispiel eine Kurznachricht an das Mobiltelefon 34 von dem Zentralrechner 6 übertragen werden. Der Nutzer kann sich an seinem Mobiltelefon 34 beispielsweise dadurch identifizieren, dass er eine Rückantwort sendet, die bestätigt, dass er im Besitz des entsprechenden Mobiltelefons 34 ist. Diese Rückantwort wird in dem Zentralrechner 6 in dem Ladestationsobjekt empfangen. Abhängig von der Rückantwort kann in dem Ladestationsobjekt bzw. dem Einrichtungsobjekt entschieden werden, ob die Nutzerfreigabe erfolgt ist. Bejahendenfalls wird über die Kommunikationsverbindung 20a eine Zustandsinformation den Schalter 10 betreffend an die Kommunikationseinrichtung 8 übertragen. In dieser Zustandsinformation ist die Information enthalten, dass der Schalter 10 geschlossen wird. Ferner kann eine Information von dem das Display repräsentierenden Einrichtungsobjekt an das Display 26 übermittelt werden, dass die Nutzerfreigabe erfolgt ist und eine entsprechende Ausgabe an dem Display 26 erfolgen.

Während des Ladevorgangs misst das Messgerät 12 die bezogene Energiemenge. Zum Ende des Ladevorgangs überträgt das Messgerät 12 Informationen zu bezogener Energiemenge an das in dem Zentralrechner 6 vorhandene Ladestationsobjekt. In dem Ladestationsobjekt wird anschließend entschieden, dass der Ladevorgang beendet ist und der Zustand des den Schalter repräsentierenden Einrichtungsobjekts in "geöffnet" geändert und anschließend ein Abrechnungsprozess ausgelöst. Bei dem Abrechnungsprozess kann zum Beispiel eine Information in dem das Display 26 repräsentierenden Einrichtungsobjekt generiert werden, dass eine Zahlung über den Münzautomat 24 oder das Kartenlesegerät 22 möglich ist. Diese Information wird über die Funkverbindung 20a an das Display 26 übertragen und der Kunde wird aufgefordert, den Zahlvorgang abzuschließen indem er entweder Geld in den Münzautomat 24 einwirft oder seine Kreditkarte in den Kartenleser 22 einführt. Abhängig von der Nutzeraktion an der Ladestation 4 werden die Zustände der jeweiligen Einrichtung verändert und diese Zustandsveränderungen werden wieder zurück an den Zentralrechner bzw. das Ladestationsobjekt übertragen.

Andererseits kann der Kunde auch beispielsweise angeben, dass er über sein Mobiltelefon 34 zahlen möchte und eine entsprechende Zustandsinformation wird zwischen dem Ladestationsobjekt bzw. dem das Mobiltelefon 34 repräsentierenden Einrichtungsobjekt und dem Mobiltelefon 34 ausgetauscht.

Wie zu erkennen ist, ist das gezeigte System hoch flexibel hinsichtlich der zur Verfügung stehenden Einrichtungen und kann an die verschiedensten Nutzerwünsche angepasst werden.

Beispielsweise kann bei einer Anmeldung eines Kunden über sein Mobiltelefon 34 in dem Ladestationsobjekt 6 festgestellt werden, dass der Kunde ein sogenannter Flottenkunde ist. Eine Flotte kann sich dadurch auszeichnen, dass ein gewisses Leistungskontingent für einen Flotte gebucht wurde. Abhängig vom Flottensensor 30 kann zunächst in dem Zentralrechner 6 bzw. dem Ladestationsobjekt in dem das den Flottensensor repräsentierende Einrichtungsobjekt implementiert ist festgestellt werden, ob die der Flotte zur Verfügung zu stellende Leistungsgrenze erreicht ist oder nicht. Ist die Leistungsgrenze erreicht, kann die Freigabe des Schalters 10 verweigert werden anderenfalls kann der Schalter 10 geschlossen werden und der Ladevorgang beginnen.

Auch gibt es Kunden, die beispielsweise ausschließlich Energie aus regenerativen Energiequellen 36 beziehen wollen. Wenn sich solche Kunden an einer Ladestation 4 anmelden, wird in dem entsprechenden Ladestationsobjekt eine Instanz eines Leistungssensors 28 geladen. Anhand der Instanz des Leistungssensors 28 kann in dem entsprechenden Ladestationsobjekt festgestellt werden, ob ausreichend Energie aus regenerativen Energiequellen 36 zur Verfügung steht und in dem Ladestationsobjekt die Entscheidung getroffen werden, ob der Ladestrom freigegeben wird oder nicht.

Auch kann ein Kunde beispielsweise eine Ladestation mittels seines Internetterminals und dem Bildschirm 32 reservieren. Hierzu kann er beispielsweise angeben, dass er zu einer bestimmten Zeit an einer bestimmten Ladestation 4 laden möchte. Der Kunde gibt die Ladestation 4 ein und in dem Zentralrechner wird in dem diese Ladestation 4 repräsentierenden Ladestationsobjekt vorgemerkt, dass ein bestimmter Kunde zu einer bestimmten Zeit laden möchte. An der Ladestation 4 kann eine Ausgabe auf dem Display 26 erfolgen, die besagt, dass die Ladestation 4 zu einem bestimmten Zeitpunkt reserviert ist. Diese Ausgabe wird gesteuert durch das dem Display 26 zugeordnete

Einrichtungsobjekt und lediglich die Zustandsinformation bzw. die auszugebende Information wird über die Kommunikationseinrichtung 8 an die Ladestation 4 übermittelt.

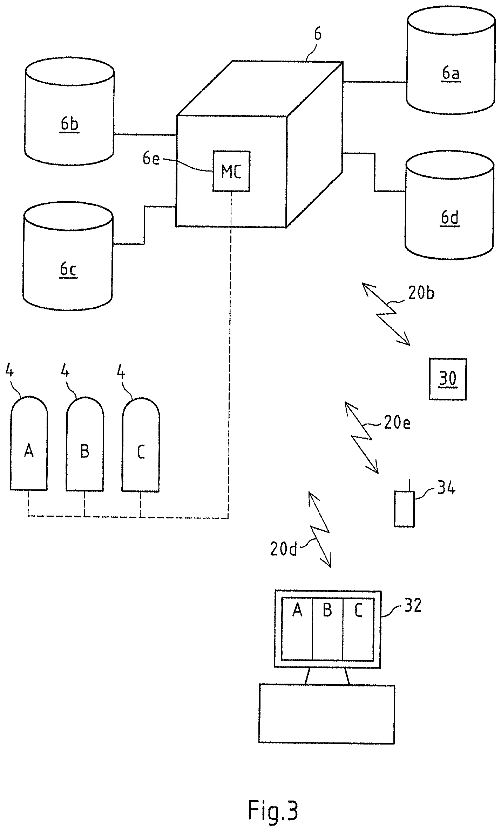

Fig. 3 zeigt ein weiteres Beispiel bei dem mehrere Ladestationen 4 mit dem Zentralrechner 6 verbunden sind. In dem Zentralrechner 6 können verschiedene Datenbanken 6a-d vorgehalten sein. Beispielsweise können in einer ersten Datenbank 6a Instanzen von Ladestationsobjekten abgelegt sein.

In einer zweiten Datenbank 6b können Instanzen von Einrichtungsobjekten abgelegt sein.

In einer dritten Datenbank 6c kann eine Zuordnungstabelle abgelegt sein, mit deren Hilfe eine Zuordnung zwischen einer Instanz eines Ladestationsobjekts und einer tatsächlichen Ladestation 4 gespeichert ist.

In einer weiteren Datenbank 6d kann eine Zuordnungstabelle abgespeichert sein, mit deren Hilfe eine Zuordnung einer Instanz eines Einrichtungsobjekts zu einer tatsächlichen Einrichtung möglich ist.

In dem in Fig. 3 gezeigten Beispiel kann die Ladestation 4 beispielsweise eine Ladestation 4 innerhalb eines Parkhauses sein. Diese Ladestation 4 wird von einem gemeinsamen Betreiber betrieben und überwacht. Die Überwachung der Ladestation 4 kann gegenständlich dadurch erfolgen, dass die Ausgabe an der Ladestation 4 über entsprechende Einrichtungsobjekte gesteuert wird. Diese Einrichtungsobjekte sind jedoch nicht mit einem Display 26 verknüpft, sondern mit dem Bildschirm 32. Das heißt, dass in jedem Ladestationsobjekt für jede Ladestation 4 eine Instanz eines Einrichtungsobjekts des Bildschirms 32 geladen ist. Über diese Instanz des Einrichtungsobjekts können Ausgaben auf dem Bildschirm 32 gesteuert werden. Für das Ladestationsobjekt ist es dabei unerheblich, wo die Ausgabe erfolgt. Vielmehr ist für das Ladestationsobjekt relevant, dass überhaupt eine Ausgabe erfolgt. Somit können auf einem einzigen Bildschirm 32 eine Mehrzahl von Ladestationen 4 überwacht werden.

Ferner ist schematisch dargestellt, dass der Zentralrechner 6 auch bei dem Beispiel gemäß der Fig. 3 mit einem Mobiltelefon 34 als auch einem Flottensensor 30 verbunden sein kann und entsprechende Instanzen von Einrichtungsobjekten je nach Bedarf den Ladestationsobjekten zugeordnet werden können.

Fig. 4 zeigt rein beispielhaft ein Ladestationsobjekt 40. Zu erkennen ist, dass in dem Ladestationsobjekt 40 verschiedene Variablen vorgegeben sind, wie beispielsweise eine Ladestationskennung, eine GPS-Koordinate, ein Ladestationsname, eine Ladestationsleistung, eine Information über einen aktuellen Ladevorgang, ob AC oder DC, eine Information über den aktuellen Ladestrom und dergleichen. Die genannten Variablen sind rein beispielhaft und lassen sich je nach Bedarf ergänzen oder verringern. Ferner ist zu erkennen, dass in einem Ladestationsobjekt neben den Variablen, die Zustände einer Ladestation repräsentieren, auch Funktionen implementiert sein können.

Das Gleiche gilt für Einrichtungsobjekte 42, 44, die ebenfalls beispielsweise Informationen über den Typ, die Identifikation und den Status einer Einrichtung enthalten können. Darüber hinaus können in den Einrichtungsobjekten ebenfalls Funktionen implementiert sein.

Bei der Inbetriebnahme einer Ladestation 4 wird eine Instanz 40' eines Ladestationsobjekts 40 geladen. In dieser Instanz 40' werden die Variablen entsprechend der Zustände der jeweiligen Ladestation 4 gesetzt. Abhängig von in der Ladestation tatsächlich angeordneten oder der Ladestation zugeordneten Einrichtungen können zusätzlich Instanzen 42', 44' der Einrichtungsobjekte 42, 44 in die Instanz 40' des Ladestationsobjekts 40 geladen werden. Ferner können weitere Instanzen von Einrichtungsobjekten in das Ladestationsobjekt 40' geladen werden, wenn diese temporär benötigt werden. Ein Beispiel hierfür ist die Verwendung eines Mobiltelefons als Display der Ladestation oder als Identifikationsmittel. Je nach Bedarf wird dann eine Instanz eines Einrichtungsobjekts in die Instanz des Ladestationsobjekts geladen. Die entsprechenden Funktionen können in den Objekten ausgelöst werden und zu Zustandsänderungen führen. Die Zustandsänderungen werden von dem Zentralrechner 6 an die zugehörige Ladestation 4 übertragen und in der Ladestation 4 durch die Einrichtungen umgesetzt.

## Patentansprüche

1. System (2) zum elektrischen Laden von Geräten, insbesondere von Fahrzeugen, umfassend:
- eine Ladestation (4),
- zumindest zwei einen Ladevorgang der Geräte unterstützenden, der Ladestation (4) zugeordneten Einrichtungen (22-26) und
- einer Kommunikationseinrichtung (8) zur Kommunikation mit einem, von der Ladestation (4) entfernten Zentralrechner (6), **dadurch gekennzeichnet, dass**
- der Zentralrechner (6) ein die Ladestation (4) repräsentierendes Ladestationsobjekt (40) speichert,
wobei
- das Ladestationsobjekt (40) die Einrichtungen (22-26) repräsentierende Einrichtungsobjekte (42, 44) aufweist,
- das Ladestationsobjekt (40) über die Kommunikationseinrichtung (8) mit den Einrichtungen (22-26) kommuniziert, derart, dass die Einrichtungsobjekte (42, 44) zumindest Zustandsinformationen mit den Einrichtungen (22-26) austauschen.

2. System (2) nach Anspruch 1, **dadurch gekennzeichnet, dass** die Einrichtungen (22-26) zumindest teilweise innerhalb der Ladestation (4) angeordnet sind und/oder dass die Einrichtungen (22-26) zumindest teilweise räumlich von der Ladestation (4) entfernt angeordnet sind.

3. System (2) nach einem der vorangehenden Ansprüche, **dadurch gekennzeichnet, dass** zumindest eine innerhalb der Ladestation (4) angeordnete Einrichtung ein Schalter (10) zum Zu- und Abschalten der über die Ladestation (4) bereitgestellten elektrischen Energie ist und dass zumindest eine zweite innerhalb der Ladestation (4) angeordnete Einrichtung ein Messgerät (12) zum Messen von über die Ladestation (4) bereitgestellter elektrischer Energie ist.

4. System (2) nach einem der vorangehenden Ansprüche, **dadurch gekennzeichnet, dass** eine Ladestation (4) diese innerhalb des Systems (2) eindeutig kennzeichnende Ladestationskennung aufweist und/oder dass die Ladestationskennung zumindest teilweise aus einer eindeutigen Kennung der Kommunikationseinrichtung (8) und/oder einer Messgerätekennung gebildet ist.

5. System (2) nach einem der vorangehenden Ansprüche, **dadurch gekennzeichnet, dass** der Zentralrechner (6) mit Hilfe zumindest der eindeutigen Kennung der Kommunikationseinrichtung (8) oder der Ladestationskennung eine Kommunikation zwischen dem Zentralrechner (6) und einer Ladestation (4) einem Ladestationsobjekt (40) zuordnet.

6. System (2) nach einem der vorangehenden Ansprüche, **dadurch gekennzeichnet, dass** eine der Ladestation (4) zugeordnete Einrichtung zumindest eine Einrichtungskennung aufweist und/oder dass die Einrichtungskennung zumindest teilweise aus der eindeutigen Kennung der Kommunikationseinrichtung (8) und/oder der Ladestationskennung gebildet ist.

7. System (2) nach einem der vorangehenden Ansprüche, **dadurch gekennzeichnet, dass** der Zentralrechner (6) die Einrichtungskennung bei einer Kommunikation mit einer Einrichtung empfängt und mit Hilfe der Einrichtungskennung die empfangenen Informationen einem Einrichtungsobjekt (42, 44) zuordnet.

8. System (2) nach einem der vorangehenden Ansprüche, **dadurch gekennzeichnet, dass** der Zentralrechner (6) eine räumlich außerhalb der Ladestation (4) angeordnete Einrichtung einem einem Ladestationsobjekt (40) zugeordneten Einrichtungsobjekt (42, 44) zuordnet.

9. System (2) nach einem der vorangehenden Ansprüche, **dadurch gekennzeichnet, dass** eine Einrichtung zumindest eine Einrichtung aus der Gruppe:
A) Kartenlesegerät;
B) Display (26);
C) Nahfunkkommunikationsgerät;
D) Geldautomat;
E) Sicherungsautomat;
F) Schütz;
G) Belegdrucker;
H) Lastsensor;
I) Lastprognoseeinrichtung;
J) Leistungsprognoseeinrichtung;
K) Batteriesensor;
L) AC/DC Wandler;
M) Flottensensor (30);
N) Mobiltelefon (34);
O) Internetseite;
P) Internetterminal;
Q) Ladesteuerschaltung;
R) intelligenter Energiezähler;
ist und dass der Zentralrechner (6) Einrichtungsobjekte (42, 44) für jeweils eine solche Einrichtung aufweist.

10. System (2) nach einem der vorangehenden Ansprüche, **dadurch gekennzeichnet, dass** der Zentralrechner (6) von einer Kommunikationseinrichtung (8) einer Ladestation (4) bei einer Initialisierung der Ladestation (4) zumindest eine Ladestationskennung sowie Einrichtungskennungen von in der Ladestation (4) angeordneten Einrichtungen empfängt und/oder dass der Zentralrechner (6) bei einer Initialisierung der Ladestation (4) eine die empfangene Ladestationskennung aufweisende Instanz eines Ladestationsobjekts (40) erstellt.

11. System (2) nach einem der vorangehenden Ansprüche, **dadurch gekennzeichnet, dass** der Zentralrechner (6) innerhalb eines Einrichtungsobjekts einen Zustand einer Einrichtung verändert, dass der Zentralrechner (6) den veränderten Zustand an die Kommunikationseinrichtung (8) übermittelt und dass die in der Ladestation (4) angeordnete Einrichtung ihren korrespondierenden physikalischen Zustand verändert.

12. System (2) nach einem der vorangehenden Ansprüche, **dadurch gekennzeichnet, dass** eine Einrichtung ihren physikalischen Zustand zusammen mit zumindest einer Einrichtungskennung mittels der Kommunikationseinrichtung (8) an den Zentralrechner (6) übermittelt und/oder das Einrichtungsobjekt (42, 44) seinen Zustand mit Hilfe von empfangenen Zustandsinformationen der Einrichtung anpasst.

13. System (2) nach einem der vorangehenden Ansprüche, **dadurch gekennzeichnet, dass** Instanzen von jeweils ein Display (26) einer Ladestation (4) repräsentierenden Einrichtungsobjekten (42, 44) eine Ausgabe auf einem gemeinsamen Bildschirm (32) steuern.

14. System (2) nach einem der vorangehenden Ansprüche, **dadurch gekennzeichnet, dass** Einrichtungsobjekte (42, 44) für räumlich von der Ladestation (4) getrennte Einrichtungen (22-26) temporär einem Ladestationsobjekt (40) zugeordnet sind.

15. System (2) nach einem der vorangehenden Ansprüche, **dadurch gekennzeichnet, dass** ein Einrichtungsobjekt (42, 44) Zustandsänderungen innerhalb einer Einrichtung emuliert und/oder dass ein Ladestationsobjekt (40) Zustandsänderungen innerhalb einer Ladestation (4) emuliert.

16. Zentralrechner (6) eingerichtet zum Steuern von zum elektrischen Laden von Geräten eingerichteten Ladestationen (4), **gekennzeichnet durch**
- ein die Ladestation (4) emulierendes Ladestationsobjekt (40), wobei
- das Ladestationsobjekt (40) der Ladestation (4) zugeordnete Einrichtungen (22-26) emulierende Einrichtungsobjekte (42, 44) aufweist,
- das Ladestationsobjekt (40) mit den Einrichtungen (22-26) kommuniziert, derart, dass die Einrichtungsobjekte (42, 44) zumindest Zustandsinformationen mit den Einrichtungen (22-26) austauschen.

17. Zentralrechner (6) nach Anspruch 30, **dadurch gekennzeichnet, dass** innerhalb eines Ladestationsobjekts (40) zumindest zwei innerhalb einer Ladestation (4) angeordnete Einrichtungen (22-26) repräsentierende Einrichtungsobjekte (42, 44) und zumindest ein eine außerhalb der Ladestation (4) angeordnete Einrichtung repräsentierende Einrichtungsobjekt (42, 44) speichert.

18. Verfahren zum Betreiben einer Ladestation (4), **dadurch gekennzeichnet, dass**
- in einem Zentralrechner (6) ein eine Ladestation (4) repräsentierendes Ladestationsobjekt (40) erstellt wird,
- in dem Zentralrechner (6) der Ladestation (4) zugeordnete Einrichtungen (22-26) repräsentierende Einrichtungsobjekte (42, 44) zugeordnet werden, und
- Zustandsinformationen zwischen dem Ladestationsobjekt (40) und den Einrichtungen (22-26) kommuniziert werden.

## Claims

1. System (2) for electrically charging devices, in particular vehicles, comprising:
- a charging station (4),
- at least two units (22-26) assigned to the charging station (4) and supporting a charging process of the devices, and
- a communication device (8) for communication with a central computer (6) remote from the charging station (4), **characterized in that**
- the central computer (6) stores a charging station object (40) representing the charging station (4), wherein
- the charging station object (40) has unit objects (42, 44) representing the units (22-26),
- the charging station object (40) communicates with the devices (22-26) via the communication device (8) in such a way that the unit objects (42, 44) at least exchange status information with the units (22-26).

2. System (2) according to claim 1, **characterized in that** the units (22-26) are at least partially arranged within the charging station (4) and/or that the units (22-26) are at least partially arranged spatially remote from the charging station (4).

3. System (2) according to any of the preceding claims, **characterized in that** at least one unit (22-26) arranged within the charging station (4) is a switch (10) for switching on and off the electrical energy provided via the charging station (4) and that at least one second unit (22-26) arranged within the charging station (4) is a measuring device (12) for measuring electrical energy provided via the charging station (4).

4. System (2) according to any of the preceding claims, **characterized in that** a charging station (4) comprises a charging station identifier which uniquely identifies it within the system (2) and/or that the charging station identifier is formed at least partially from an unique identifier of the communication device (8) and/or identifier of the measuring device.

5. System (2) according to any of the preceding claims, **characterized in that** the central computer (6) assigns a communication between the central computer (6) and a charging station (4) to a charging station object (40) with the aid of at least the unique identifier of the communication device (8) or the charging station identifier.

6. System (2) according to any of the preceding claims, **characterized in that** a unit assigned to the charging station (4) has at least one unit identifier and/or that the unit identifier is formed at least partially from the unique identifier of the communication device (8) and/or the charging station identifier.

7. System (2) according to any of the preceding claims, **characterized in that** the central computer (6) receives the unit identifier during a communication with a unit and with the aid of the unit identifier assigns the received information to a unit object (42, 44).

8. System (2) according to one of the preceding claims, **characterized in that** the central computer (6) assigns a unit arranged spatially outside the charging station (4) to a unit object (42, 44) assigned to a charging station object (40).

9. System (2) according to any of the preceding claims, **characterized in that** a unit at least one unit from the group:
A) card reader;
B) display (26);
C) proximity radio communication device;
D) cash dispenser;
E) automatic circuit breaker;
F) contactor;
G) receipt printer;
H) load sensor;
I) load forecasting device;
J) power forecasting device;
K) battery sensor;
L) AC/DC converter;
M) fleet sensor (30);
N) cell phone (34);
O) internet site;
P) internet terminal;
Q) charge control circuit;
R) intelligent energy meter;
and **in that** the central computer (6) has unit objects (42, 44) for each such unit.

10. System (2) according to any of the preceding claims, **characterized in that** the central computer (6) receives from a communication device (8) of a charging station (4) during an initialization of the charging station (4) at least one charging station identifier as well as unit identifiers of units arranged in the charging station (4) and/or that the central computer (6) creates during an initialization of the charging station (4) an instance of a charging station object (40) comprising the received charging station identifier.

11. System (2) according to any of the preceding claims, **characterized in that** the central computer (6) changes a state of a unit within a unit object, that the central computer (6) transmits the changed state to the communication device (8) and that the unit arranged in the charging station (4) changes its corresponding physical state.

12. System (2) according to any of the preceding claims, **characterized in that** a unit transmits its physical state together with at least one unit identifier to the central computer (6) by means of the communication device (8) and/or the unit object (42, 44) adapts its state with the aid of received state information of the unit.

13. System (2) according to any of the preceding claims, **characterized in that** instances of unit objects (42, 44) each representing a display (26) of a charging station (4) control an output on a common screen (32).

14. System (2) according to any of the preceding claims, **characterized in that** unit objects (42, 44) for units (22-26) spatially separated from the charging station (4) are temporarily assigned to a charging station object (40).

15. System (2) according to any of the preceding claims, **characterized in that** a unit object (42, 44) emulates state changes within a unit and/or that a charging station object (40) emulates state changes within a charging station (4).

16. Central computer (6) arranged for controlling charging stations (4) arranged for electrically charging devices, **characterized by**
- a charging station object (40) emulating the charging station (4), wherein
- the charging station object (40) of the charging station (4) comprises unit objects (42, 44), emulating units (22-26) assigned tot he charging station (4)
- the charging station object (40) communicates with the devices (22-26) in such a way that the unit objects (42, 44) at least exchange status information with the units (22-26).

17. Central computer (6) according to claim 16, **characterized in that** within a charging station object (40) at least two unit objects (42, 44) representing units (22-26) arranged within a charging station (4) and at least one unit object (42, 44) representing a unit arranged outside the charging station (4) are stored.

18. Method for operating a charging station (4), **characterized in that**
- a charging station object (40) representing a charging station (4) is created in a central computer (6),
- in the central computer (6) unit objects (42, 44) representing units (22-26) assigned to the charging station (4) are assigned to, and
- status information is communicated between the charging station object (40) and the unit (22-26).

## Revendications

1. Système (2) pour la charge électrique d'appareils, en particulier de véhicules, comprenant :
- un poste de charge (4),
- au moins deux dispositifs (22-26) associés au poste de charge (4), soutenant un processus de charge de l'appareil, et
- un dispositif de communication (8) pour la communication avec un ordinateur central (6) distant du poste de charge (4), **caractérisé en ce que**
- l'ordinateur central (6) mémorise un objet poste de charge (40) représentant le poste de charge (4), où
- l'objet poste de charge (40) comporte des objets dispositifs (42, 44) représentant les dispositifs (22-26) ,
- l'objet poste de charge (40) communique avec les dispositifs (22-26) via le dispositif de communication (8), de sorte que les objets dispositifs (42, 44) échangent au moins des informations d'état avec les dispositifs (22-26).

2. Système (2) selon la revendication 1, **caractérisé en ce que** les dispositifs (22-26) sont agencés au moins partiellement au sein du poste de charge (4) et/ou **en ce que** les dispositifs (22-26) sont agencés au moins partiellement spatialement distants du poste de charge (4).

3. Système (2) selon l'une des revendications précédentes, **caractérisé en ce qu'**au moins un dispositif agencé au sein du poste de charge (4) est un commutateur pour permettre et arrêter l'énergie électrique fournie par le poste de charge (4) et **en ce qu'**au moins un dispositif agencé au sein du poste de charge (4) est un appareil de mesure (12) pour mesurer l'énergie électrique fournie par le poste de charge (4) .

4. Système (2) selon l'une des revendications précédentes, **caractérisé en ce qu'**un poste de charge (4) présente un identifiant de poste de charge, caractérisant celui-ci de manière univoque au sein du système (2) et/ou **en ce que** l'identification de poste de charge est formé au moins partiellement d'un identifiant univoque du dispositif de communication (8) et/ou d'un identifiant d'appareil de mesure.

5. Système (2) selon l'une des revendications précédentes, **caractérisé en ce que** l'ordinateur central (6) attribue un objet poste de charge (40) à une communication entre l'ordinateur central (6) et un poste de charge (4) au moyen au moins de l'identifiant univoque du dispositif de communication (8) ou de l'identifiant de poste de charge.

6. Système (2) selon l'une des revendications précédentes, **caractérisé en ce qu'**un dispositif associé au poste de charge (4) présente au moins un identifiant de dispositif et/ou **en ce que** l'identifiant de dispositif est formé au moins partiellement de l'identifiant univoque du dispositif de communication (8) et/ou de l'identifiant de poste de charge.

7. Système (2) selon l'une des revendications précédentes, **caractérisé en ce que** l'ordinateur central (6) reçoit l'identifiant du dispositif lors d'une communication avec un dispositif et attribue un objet dispositif (42, 44) aux informations reçues au moyen de l'identifiant de dispositif.

8. Système (2) selon l'une des revendications précédentes, **caractérisé en ce que** l'ordinateur central (6) attribue un objet dispositif (42, 44) associé à un objet poste de charge (40) à un dispositif agencé spatialement à l'extérieur du poste de charge (4).

9. Système (2) selon l'une des revendications précédentes, **caractérisé en ce qu'**un dispositif est au moins un dispositif du groupe :
A) appareil de lecture de carte ;
B) affichage (26) ;
C) appareil de communication radio courte distance ;
D) borne de paiement ;
E) appareil de sécurisation ;
F) protection ;
G) imprimante de reçu ;
H) détecteur de charge ;
I) dispositif de pronostic de charge ;
J) dispositif de pronostic de puissance ;
K) détecteur de batterie ;
L) convertisseur AC/DC ;
M) détecteur de flotte (30) ;
N) téléphone mobile (34) ;
O) site internet ;
P) terminal internet ;
Q) commutateur de commande de charge ;
R) compteur énergétique intelligent ;
et **en ce que** l'ordinateur central (6) comporte un objet dispositif (42, 44) pour chacun de ces dispositifs.

10. Système (2) selon l'une des revendications précédentes, **caractérisé en ce que** l'ordinateur central (6) reçoit d'un dispositif de communication (8) d'un poste de charge (4) lors de l'initialisation du poste de charge (4), au moins un identifiant de poste de charge ainsi que des identifiants de dispositif des dispositifs agencés dans le poste de charge (4) et/ou **en ce que** l'ordinateur central (6) fournit lors de l'initialisation du poste de charge (4), une instance comportant l'identifiant de poste de charge reçu d'un objet poste de charge (40).

11. Système (2) selon l'une des revendications précédentes, **caractérisé en ce que** l'ordinateur central (6) modifie un état d'un dispositif au sein d'un objet dispositif, **en ce que** l'ordinateur central (6) transmet l'état modifié au dispositif de communication (8) et **en ce que** le dispositif agencé dans le poste de charge (4) modifie son état physique en conséquence.

12. Système (2) selon l'une des revendications précédentes, **caractérisé en ce qu'**un dispositif transmet à l'ordinateur central (6), son état physique avec au moins un identifiant de dispositif au moyen du dispositif de communication (8) et/ou l'objet dispositif (42, 44) ajuste son état au moyen des informations d'état reçues du dispositif.

13. Système (2) selon l'une des revendications précédentes, **caractérisé en ce que** l'instance de chaque objets dispositif (42, 44) représentant un affichage d'un poste de charge (4) commande une sortie sur un écran commun (32).

14. Système (2) selon l'une des revendications précédentes, **caractérisé en ce que** les objets dispositifs (42, 44) pour les dispositifs spatialement séparés du poste de charge (4) sont associés temporairement à un objet poste de charge (40).

15. Système (2) selon l'une des revendications précédentes, **caractérisé en ce qu'**un objet dispositif (42, 44) émule des modifications d'état d'un dispositif et/ou **en ce qu'**un objet poste de charge (40) émule des modifications d'état dans un poste de charge (4).

16. Ordinateur central (6) conçu pour commander des postes de charge (4) pour le chargement électrique d'appareils, **caractérisé par**
- un objet poste de charge (40) émulant le poste de charge (4), où
- l'objet poste de charge (40) du poste de charge (4) présente des objets dispositif (42, 44) associés, émulant des dispositifs (22-26),
- l'objet poste de charge (40) communique avec les dispositif (22-26) de sorte que les objets dispositif (42, 44) échangent au moins des informations d'état avec les dispositifs (22-26).

17. Ordinateur central (6) selon la revendication 16, **caractérisé en ce qu'**au sein d'un objet poste de charge (40) sont stockés au moins deux objets dispositif (42, 44) représentant des dispositifs (22-26) agencés dans un poste de charge (4) et au moins un objet dispositif (42, 44) représentant un dispositif agencé à l'extérieur du poste de charge (4).

18. Procédé de fonctionnement d'un poste de charge (4), **caractérisé en ce que**
- un objet poste de charge (40) représentant un poste de charge (4) est créé dans un ordinateur central (6),
- dans l'ordinateur central (6), des objets dispositif (42, 44) représentant les dispositifs (22-26) attribués au poste de charge (4) sont attribués, et
- des informations d'état sont échangées entre l'objet poste de charge (40) et les dispositifs (22-26) .
